# EUROPÄISCHE PATENTANMELDUNG

(11) **EP 0 821 033 A1**
(43) Veröffentlichungstag der Anmeldung: **28.01.1998**
(21) Anmeldenummer: 97111730.4
(22) Anmeldetag: 10.07.1997
(51) Int. Cl.: C08K 5/50, C08L 55/02

(54) **Verarbeitungsstabilisierung von ABS mit Arylphosphinen**

(30) Priorität: 23.07.1996 DE 19629691
(71) Anmelder: BAYER AG, 51368 Leverkusen (DE)
(72) Erfinder: Köhler, Burkhard, Dr., 51373 Leverkusen (DE); Tischer, Werner, Dipl.Ing., 41542 Dormagen (DE)

(57) **Zusammenfassung**

Verwendung von Arylphosphinen der Formel (I),

P (Ar)₃ (I)

worin
- Ar: für einen C₆-C₁₈-Arylrest steht, der durch bis zu drei Substituenten aus der Gruppe Cl, Br, F, C₁-C₁₂-Alkyl, C₁-C₁₂-Alkoxy, C₇-C₉-Aralkyl, C₁-C₁₂-Alkoxycarbonyl, Carbaldehyd, Carboxyl, Sulfonsäure substituiert sein kann, für den Rest des Furans oder den des Thiophens,
als Verarbeitungsstabilisator für ABS-Formmassen.

## Beschreibung

Die Erfindung betrifft die Verwendung von Arylphosphinen als Stabilisatoren für ABS-Formmassen.

Wegen ihres Gehaltes an ungesättigten Gruppen im Kautschukteil zeigen ABS-Polymerisate bei der Verarbeitung oft eine unerwünschte Verfärbung.

Es wurde gefunden, daß sich die Verfärbung von ABS bei der Verarbeitung in Knetern, Extrudern oder Spritzgußmaschinen durch Zusatz von Arylphosphinen verringern läßt.

Gegenstand der Erfindung ist daher die Verwendung von Arylphosphinen insbesondere der Formel (I),

P (Ar)₃ (I)

worin
- Ar: für einen C₆-C₁₈-Arylrest steht, der durch bis zu drei Substituenten aus der Gruppe Cl, Br, F, C₁-C₁₂-Alkyl, C₁-C₁₂-Alkoxy, C₇-C₉-Aralkyl, C₁-C₁₂-Alkoxycarbonyl, Carbaldehyd, Carboxyl, Sulfonsäure substituiert sein kann, für den Rest des Furans oder den des Thiophens,
als Verarbeitungsstabilisator für ABS-Formmassen.

Die drei Reste Ar können gleich oder verschieden sein. Besonders bevorzugt ist Triphenylphosphin.

Zur Stabilisierung kann man der Schmelze des ABS 0,051 bis 1 Gew.-% Arylphosphin zufügen. Es ist auch möglich, das Arylphosphin bereits bei der Herstellung des ABS zuzufügen.

100 Gew.-Teile der Mischungen aus ABS und Triarylphosphinen können 1 bis 1 000 Gew.-Teile anderer Polymerer, z.B. Polycarbonate, Polyester, Polyamide, Polyurethan, Polyolefine, zugesetzt werden.

Neben den Arylphosphinen können noch andere Stabilisatoren, z.B. sterisch gehinderte Phenole, zugesetzt werden.

ABS-Formmassen im Sinne der vorliegenden Erfindung sind alle mit ungesättigten Kautschuken schlagzäh modifizierte thermoplastische Polymerisate. Es sind also eingeschlossen Pfropfpolymerisate von Styrol (oder dessen Derivate) und Acrylnitril (oder dessen Derivate) auf Polydiene (wie Polybutadien, Styrol-Butadienkautschuke, Polyisopren), Mischungen solcher Pfropfpolymerisate mit thermoplastischen Harzen (wie Polystyrol, Styrol-Acrylnitril-Copolymerisate), d.h. "ABS"-Polymerisate im engeren Sinn.

Ebenfalls erfaßt sind aber auch andere Pfropfpolymerisate auf Basis ungesättigter Kautschuke, z.B. kautschukmodifiziertes Polystyrol, Pfropfpolymerisate von Styrol auf Polybutadien, d.h. schlagfeste Polystyrole, meist kurz HIPS genannt.

Beispiele für Triarylphosphine der Formel (I) sind Triphenylphosphin, Tri-o-tolylphosphin, Trifurylphosphin, Trithienylphosphin, Tri-o-anisylphosphin, vorzugsweise Triphenylphosphin.

Die erfindungsgemäßen Mischungen zeichnen sich durch eine helle Eigenfarbe und Stabilität gegen thermische Verfärbung aus.

### Beispiele

### Folgende Komponenten wurden eingesetzt:

### Pfropf I

Pfropfpolymerisat aus 50 Gew.-% einer Mischung von Styrol und Acrylnitril im Gewichtsverhältnis 72:28 auf 50 Gew.-% Polybutadien, wobei der mittlere Teilchendurchmesser des Polybutadienlatex 400 nm beträgt.

### Pfropf II

Pfropfpolymerisat aus 25 Gew.-% Acrylnitril, 7 Gew.-% Styrol und 57 Gew.-% α-Methylstyrol auf 11 Gew.-% eines bimodalen Polybutadienlatex mit 50 Gew.-% mit einem mittleren Teilchendurchmesser von 100 nm und 50 Gew.-% mit einem mittleren Teilchendurchmesser von 400 nm.

### SAN

Styrol/Acrylnitrilcopolymer mit einem Acrylnitrilgehalt von 28 Gew.-% in einer spezifischen Viskosität von 60 g/l (5 g/l, DMF 20°C).

### ZKF

### Bis-(2-hydroxy-3-cyclohexyl-5-methyl-phenyl)methan

### TPP

### Triphenylphosphin

### Beispiel 1 (Vergleich)

Man mischt 82 % Pfropf II, 13 % Pfropf I und 5 % SAN mit 0,2 % ZKF.

### Beispiel 2 (erfindungsgemäß)

Man mischt 82 % Pfropf II, 13 % Pfropf I und 5 % SAN mit 0,2 % ZKF und 0,5 % TPP.

### Beispiel 3 (erfindungsgemäß)

Man mischt 82 % Pfropf II, 13 % Pfropf I und 5 % SAN mit 0,5 % TPP.

| Beispiel | 250°C, | 19s | 270°C, | 75s | 290°C, | 75s | 310°C, | 75s |
|---|---|---|---|---|---|---|---|---|
| 1 | r | 0 | r, b | - | r, b | - - | r, b (V) | - - - |
| 2 | r | * | r | 0 | r | - | r | - - |
| 3 | g | * | g | 0 | g | - | g | - - |

Die Tabelle beschreibt den Rohton des Polymeren in Abhängigkeit von den Spritzbedingungen (Temperatur, Taktzeit).

Die Eigenfarbe wird durch folgende Abkürzungen beschrieben:
- r =: rötlich,
- b =: bräunlich,
- g =: grünlich,
- ge =: gelblich,
- (V) =: Verbrennungsschlieren.

In einer Skala von + über 0 bis - - - ist die Helligkeit der Proben dargestellt, wobei * eine helle Eigenfarbe bedeutet.

### Beispiel 4 (Vergleich)

Man mischt 60 % Pfropf I und 40 % SAN mit 0,2 % ZKF.

### Beispiel 5

Man mischt 60 % Pfropf I und 40 % SAN mit 0,2 % ZKF und 0,5 % TPP.

| Beispiel | 250°C, | 19s | 270°C, | 75s | 290°C, | 75s | 310°C, | 75s |
|---|---|---|---|---|---|---|---|---|
| 1 | r | 0 | r | 0 | r | 0 | r | - - |
| 2 | ge | * | ge | * | ge | * | ge | 0 |

Aus den Beispielen erkennt man, daß die Eigenfarbe nach Verarbeitung bei den TPP-haltigen Proben durchgehend besser ist. Ferner tendieren die TPP-haltigen Proben eher zu einer grünlichen Eigenfarbe, die sich coloristisch besser korrigieren läßt als die rötliche Eigenfarbe der ZKF-haltigen Produkte.

## Patentansprüche

1. Verwendung von Arylphosphinen der Formel (I),
P (Ar)₃ (I)
worin
Ar für einen C₆-C₁₈-Arylrest steht, der durch bis zu drei Substituenten aus der Gruppe Cl, Br, F, C₁-C₁₂-Alkyl, C₁-C₁₂-Alkoxy, C₇-C₉-Aralkyl, C₁-C₁₂-Alkoxycarbonyl, Carbaldehyd, Carboxyl, Sulfonsäure substituiert sein kann, für den Rest des Furans oder den des Thiophens,
als Verarbeitungsstabilisator für ABS-Formmassen.
